# EUROPEAN PATENT SPECIFICATION

(11) **EP 2 088 050 B1**
(45) Date of publication and mention of the grant of the patent: **05.10.2016**
(21) Application number: 09000966.3
(22) Date of filing: 23.01.2009
(51) Int. Cl.: B61H 5/00, F16D 65/092

(54) **Disc brake friction member assembly**
Anordnung des Reibungselements einer Scheibenbremse
Ensemble d'éléments de friction de frein à disque

(30) Priority: 07.02.2008 JP 2008027959; 07.02.2008 JP 2008027960
(43) Date of publication of application: 12.08.2009
(73) Proprietor: Akebono Brake Industry Co., Ltd., Tokyo 103-8534 (JP)
(72) Inventor: Furukawa, Hitoshi, c/o Akebono Brake Industry Co., Ltd., Toky 103-8534 (JP); Makishima, Takuya, c/o Akebono Brake Industry Co., Ltd., Toky 103-8534 (JP)
(74) Representative: Grünecker Patent- und Rechtsanwälte PartG mbB

(56) References cited:
- EP-A- 0 212 925
- EP-A- 0 691 485
- JP-A- 4 165 129

## Description

### BACKGROUND OF THE INVENTION

### <FIELD OF THE INVENTION>

The present invention relates to a disc brake friction member assembly, having the features of the preamble of claim 1, which is used in, for example, a disc brake system of a railway vehicle.

### <BACKGROUND ART>

Related prior art is disclosed in EP 0 212 925 A and EP 0 691 485 A. EP 0 212 925 A is seen as the closest prior art.

A disc brake system includes a disc rotor which is fixed to an axle, a disc brake friction member assembly which is disposed in such a manner as to confront the disc rotor and a brake caliper which incorporates an actuator for driving the disc brake friction member assembly towards and away from the disc rotor and is fixed to a vehicle body frame. The disc brake system generates a brake torque by virtue of sliding friction produced when a friction member of the disc brake friction member assembly is pressed against the disc rotor.

In a disc brake friction member assembly which is used in a disc brake system of a railway vehicle, the disc brake friction member assembly normally includes a torque receiving plate (this may be also referred to as a pressure plate) on a front surface side of which a friction member adapted to be pressed against a disc rotor is built and which receives a brake torque applied to the friction member and an anchor plate which is not only fastened to a rear surface of the torque receiving plate but also attached to an anchor block on a vehicle side for transmitting the brake torque received by the torque receiving plate to the anchor block. (for example, refer to JP-Y2-2564497.)

In addition, as a fastening structure of the torque receiving plate to the anchor plate, a construction has been known in which a press fit pin is inserted into both the torque receiving plate and the anchor plate so as to interconnect the plates in such a manner that brake torque can be transmitted therebetween (for example, refer to JP-B2-2882872 or the corresponding publication JP 04 165 129 A).

However, since the press fit pin which connects the anchor plate and the torque receiving plate together is tightly fitted in the respective plates along the full circumference thereof without any play, not only a load in a tangential direction (a circumferential direction) of the disc rotor in which the brake torque is transmitted when the brake is applied but also a load in a radial direction of the disc rotor produced in conjunction with thermal deformations of the respective plates are applied to the press fit pin, and the metal fatigue tends to be easily progressed in the press fit pin. Because of this, in order to prevent the occurrence of a crucial accident in which the brake force cannot be transmitted due to the breakage of the press fit pin as a result of the metal fatigue, the maintenance and inspection work has to frequently be carried out to replace friction member assemblies in early stages, leading to a problem that the number of times of implementation of maintenance and inspection work is increased.

In addition, in the railway vehicle, since the disc brake friction member assembly tends to become large in size, a divided disc brake friction member assembly is also proposed which is made up of a plurality of friction member assemblies which are disposed in series in a circumferential direction of a disc rotor.

Each friction member assembly includes a torque receiving plate on to a front surface side of which a friction member adapted to be pressed against the disc rotor is built and which receives brake torque applied to the friction member and an anchor plate which is fastened to a rear surface of the torque receiving plate.

Of the friction member assemblies which are aligned in series, the anchor plate of the disc brake friction member assembly which lies on a downstream side of a rotational direction of the disc rotor is brought into abutment with an anchor block fixed to the vehicle body, whereby brake torque applied to the friction member assembly which lies on an upstream side of the rotational direction of the disc rotor is transmitted to the anchor block via the friction member assembly which lies adjacent thereto on the downstream side.

In the conventional divided disc brake friction member assembly in which the plurality of friction member assemblies are disposed in series in the circumferential direction of the disc rotor, since the friction member assemblies which lie adjacent to each other in such a state that they are disposed in series are brought into abutment with each other at end portions thereof with edges of the anchor plates aligned with ends of the torque receiving plates, depending upon the dimension tolerance or building error of the respective friction member assemblies, there is caused a fear that the torque receiving plates of the respective assemblies have been brought into abutment with each other before the anchor plates thereof are brought into abutment with each other. As this occurs, there is caused a problem that the brake torque inputted into the friction member assembly which lies on the upstream side of the rotational direction of the disc rotor is transmitted to the torque receiving plate of the friction member assembly which lies adj acent to the upstream side friction member assembly on the down stream side of the rotational direction of the disc rotor.

As a result, the brake torque received by the friction member assembly which lies on the upstream side of the rotational direction of the disc rotor is inputted into the torque receiving plate of the friction member assembly which lies on the downstream side of the rotational direction of the disc rotor as an extra brake torque, whereby an excessive load is applied to the connecting means between the torque receiving plate and the anchor plate, leading to a fear that a crucial problem is called for that the durability of the friction member assembly is reduced or rivets or welds which constitute the connecting means are broken.

It is an object of the present invention to provide a disc brake friction member assembly that is improved in view of the above described disadvantages of the prior art.

### SUMMARY OF THE INVENTION

It is suggested to provide disc brake friction member assembly having the features of claim 1.

One or more embodiments of the invention provide a disc brake friction member assembly in which metal fatigue is difficult to be occurred in an engagement portion which transmits brake torque, so that a frequency of maintenance and inspection work to detect metal fatigue can be reduced to increase handling properties, and so that the disc brake friction member assembly can not only increase assembling properties by reducing number of parts but also realize a reduction in production costs.

Moreover, one or more embodiments of the invention may provide a disc brake friction member assembly including a plurality of friction member assemblies disposed in series in a circumferential direction of a disc rotor in which brake torque received by the frictionmember assembly which lies on an upstream side of a rotational direction of the disc rotor is not inputted a torque receiving plate of the friction member assembly which lies on a downstream side of the rotational direction of the disc rotor, so that the durability of the friction member assembly is reduced or the connecting means such as rivets are broken due to the excessive load.

In accordance with one or more embodiments of the invention, a disc brake friction member assembly is provided with: a torque receiving plate, wherein a friction member is attached on a front side of the torque receivingmember and the torque receiving member receives a brake torque applied to the friction member; an anchor plate fixed to a rear surface of the torque receiving plate and attached to an anchor block on a vehicle side; a cut-and-erected portion formed on the rear surface of the torque receiving plate and having an abutment surface along a direction orthogonal to a direction in which the brake torque is applied; and a cut-out portion provided on the anchor plate, wherein the cut-and-erected portion fits to the cut-out portion so that the cut-out portion receives the brake torque via the abutment surface.

In the disc brake friction member assembly, the disc brake friction member assembly may be divided into two disc brake friction member assemblies which are aligned in the direction in which the brake torque is applied.

In the disc brake friction member assembly described above, the brake torque is transmitted from the torque receiving plate to the anchor plate by protrusion and recess fitting between the cut-and-erected portion on the torque receiving plate and the cut-out portion on the anchor plate.

In this protrusion and recess fitting between the cut-and-erected portion and the cut-out portion, the cut-and-erected portion is allowed to loosely fit in the cut-out portion in the radial direction of the disc rotor which intersects at right angles the direction in which the brake torque is transmitted. Thereby, the application of a radial load generated between the respective plates due to thermal deformation to the protrusion and recess fitting portion can be avoided.

Consequently, when comparing with the conventional case where the plates are connected together by the press fit pin, the load applied to the protrusion and recess fitting portion which is the engagement portion for brake torque transmission is reduced, whereby the metal fatigue is made difficult to occur in the protrusion and recess fitting portion.

As a result, the number of times of implementation of maintenance and inspection work to detect metal fatigue can be reduced so as to increase the handling properties of the disc brake friction member assembly.

In addition, since the cut-and-erected portion provided on the torque receiving plate is such as to be formed integrally on the torque receiving plate, compared with the conventional disc brake friction member assembly in which the separate press fit pin is used, not only can the assembling properties be increased by reducing the number of constituent parts involved but also a reduction in production costs can be realized.

Moreover, in accordance with one or more embodiments of the invention, a disc brake friction member assembly may be provided with a plurality of friction member assemblies which are disposed in series in a circumferential direction of a disc rotor. Each friction member assembly is provided with: a torque receiving plate for receiving a brake torque applied to a friction member; and an anchor plate fixed to a rear surface of the torque receiving plate. The anchor plate is brought into abutment with an anchor block fixed to a vehicle body so that the brake torque is transmitted to the anchor block. The friction member assemblies disposed in series to be adjacent to each other are in abutment with each other by end portions of the anchor plates projecting further than end portions of the torque receiving plates.

In the disc brake friction member assembly described above, since the friction member assemblies disposed in series to be adjacent to each other are in abutment with each other at the end portions of the anchor plates which are attached in such a manner as to project further than the end portions of the torque receiving plates, while the torque receiving plates are space apart from each other, the brake torque applied to the torque receiving plate of the friction member assembly which lies on the upstream side of the rotational direction of the disc rotor is transmitted from the anchor plate of the upstream-side friction member assembly to the anchor plate of the friction member assembly which lies adjacent thereto on the downstream side. Accordingly, the brake torque is not transmitted to the torque receiving plate of the downstream-side friction member assembly.

Consequently, in the respective friction member assemblies which are disposed in series in the circumferential direction of the disc rotor, the brake torque received by the friction member assembly which lies on the upstream side of the rotational direction of the disc rotor is not inputted into the torque receiving plate of the friction member assembly which lies on the downstream side of the disc rotor, whereby the problem of reduction in durability or failure of the connecting means can be avoided which would otherwise be caused in the downstream-side friction member assembly due to the excessive load.

Other aspects and advantages of the invention will be apparent from the following description, the drawings and the claims.

### BRIEF DESCRIPTION OF THE DRAWINGS

Fig. 1 is a front view of a disc brake friction member assembly according to a first exemplary embodiment of the invention in accordance with the subject matter of the claims.
Fig. 2 is a rear view of the disc brake friction member assembly shown in Fig. 1.
Fig. 3 is a view resulting when the disc brake friction member assembly is seen in a direction indicated by an arrow A in Fig. 2.
Fig. 4 is an exploded perspective view of the disc brake friction member assembly shown in Fig. 2.
Figs. 5(a) to 5(c) are explanatory views of steps of connecting a plate spring to a lining assembly shown in Fig. 4.
Fig. 6 is a rear view of the disc brake friction member assembly in which a torque receiving plate and an anchor plate are removed from the disc brake friction member assembly so as to expose link plates which receive pressures from respective lining assemblies.
Fig. 7 is a sectional view taken along the line B-B in Fig. 6.
Fig. 8 is a sectional view taken along the line C-C in Fig. 6.
Fig. 9 is a sectional view taken along the line D-D in Fig. 1.
Fig. 10 is a sectional view taken along the line E-E in Fig. 2.
Fig. 11 is a front view of a disc brake friction member assembly according to a second exemplary embodiment not being the present invention.
Fig. 12 is a view as seen in a direction indicated by an arrow 12 in Fig. 11.
Fig. 13 is a view as seen in a direction indicated by an arrow 13.
Fig. 14 is a front view of a disc brake friction member assembly according to a third exemplary embodiment not being the present invention.
Fig. 15 is a rear view of the disc brake friction member assembly shown in Fig. 14.
Fig. 16 is a view as seen in a direction indicated by an arrow 16 in Fig. 15.
Fig. 17 is a sectional view taken along the line 17-17 in Fig. 14.
Fig. 18 is a perspective view showing a state in which an anchor plate and a torque receiving plate of one of friction member assemblies shown in Fig. 15 are removed.
Fig. 19 is a sectional view taken along the line 19-19 in Fig. 15.
Fig. 20 is a sectional view taken along the line 20-20 in Fig. 15.

### <Description of Reference Numerals>

- 1: ......... disc brake friction member assembly
- 1A, 1B: ......... disc brake friction member assembly
- 3: ......... friction member
- 4: ......... backing plate
- 5: ......... lining assembly
- 7: ......... torque transmission ring
- 11: ......... guide hole
- 12: ......... guide plate
- 15: ......... plate spring
- 17: ......... torque receiving plate
- 21: ......... rear surface abutment portion
- 22: ......... plate abutment portion
- 24, 25: ......... link plate
- 27: ......... connecting shaft portion
- 28: ......... fastening piece
- 31: ......... fitting hole
- 32: ......... rotation restricting depression
- 33: ......... notch
- 35: ......... local opening
- 37: ......... cut
- 43: ......... rotation restricting projection
- 48: ......... anchor plate
- 61: ......... abutment surface
- 63: ......... cut-and-erected portion
- 65: ......... cut-out portion
- 101: ......... disc brake friction member assembly
- 103A, 103B: ......... friction member assembly
- 105A, 105B: ......... friction member
- 107A, 107B: ......... torque receiving plate
- 109A, 109B: ......... anchor plate
- 111: ......... spot welding
- 113: ......... anchor block
- 121: ......... disc brake friction member assembly
- 123A, 123B: ......... friction member assembly
- 125: ......... friction member
- 127A, 127B: ......... torque receiving plate
- 129A, 129B: ......... anchor plate
- 131: ......... rivet
- 141: ......... backing plate
- 142: ......... pad assembly
- 145A, 145B: ......... guide plate
- 147: ......... rivet
- 151: ......... pad mounting hole
- 153, 154: ......... link plate
- 156: ......... convexly raised spherical portion
- 157: ......... locking hole
- 158: ......... locking claw.

### DETAILED DESCRIPTION OF THE EXEMPLARY EMBODIMENTS

Hereinafter, a first exemplary embodiment of a disc brake friction member assembly according to the invention and two exemplary embodiments usefull for understanding the invention will be described in detail by reference to the accompanying drawings.

### <First Exemplary Embodiment>

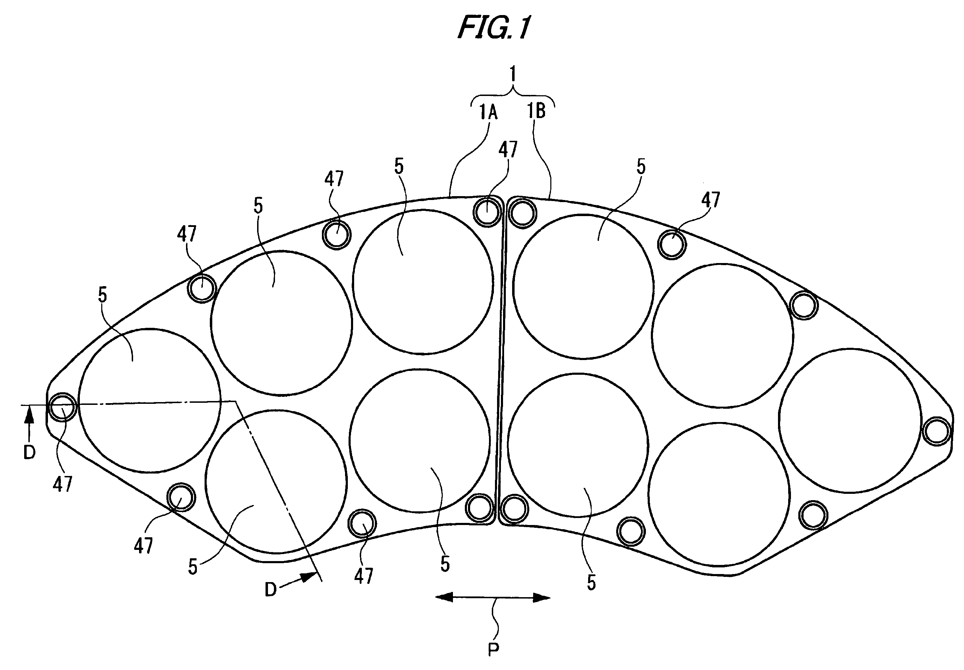

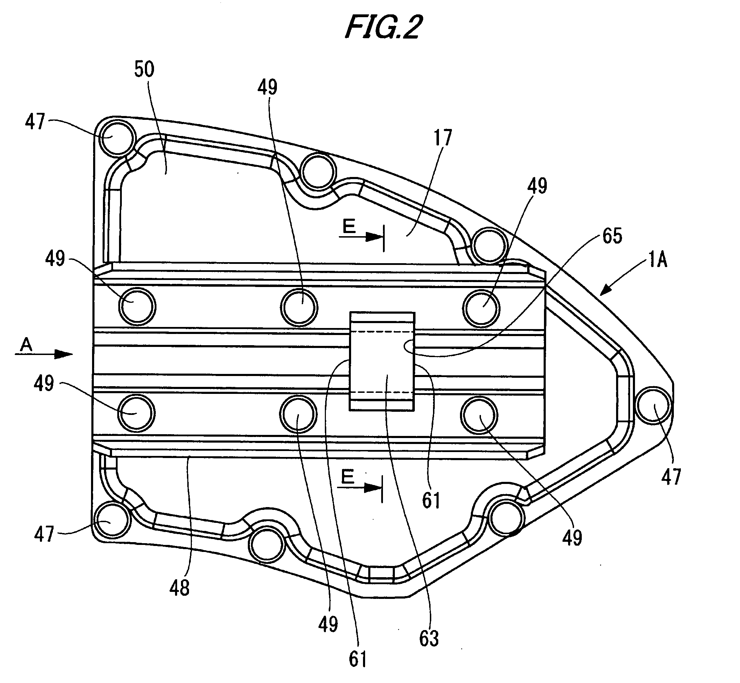

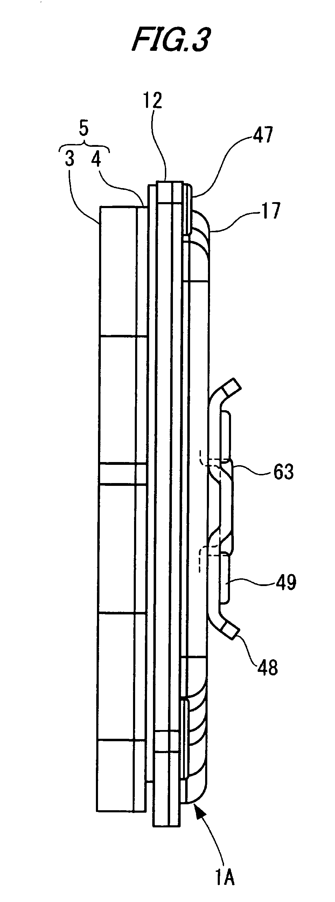

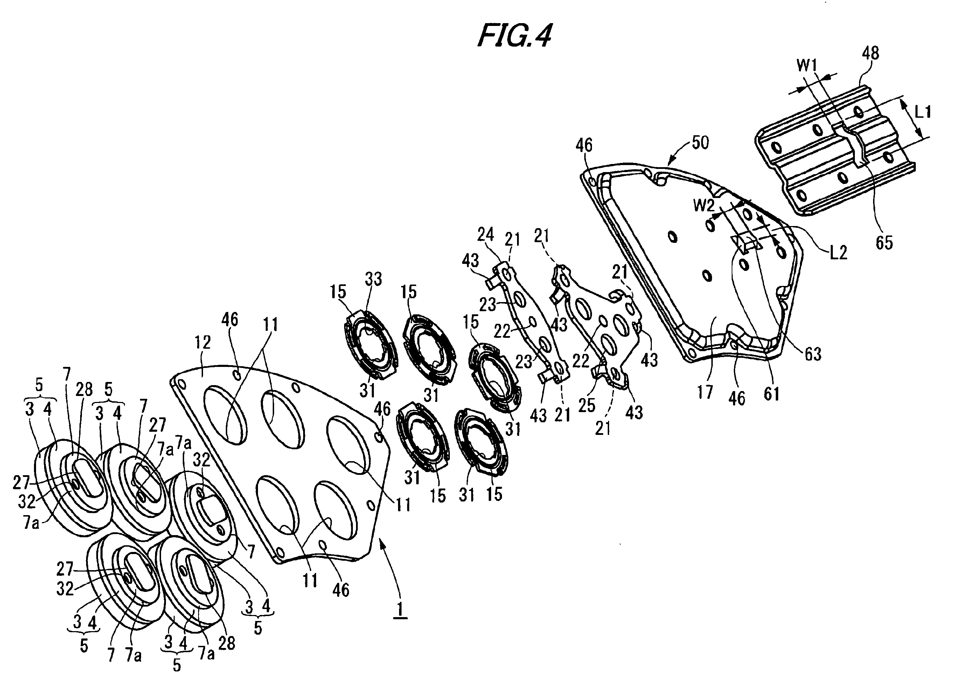

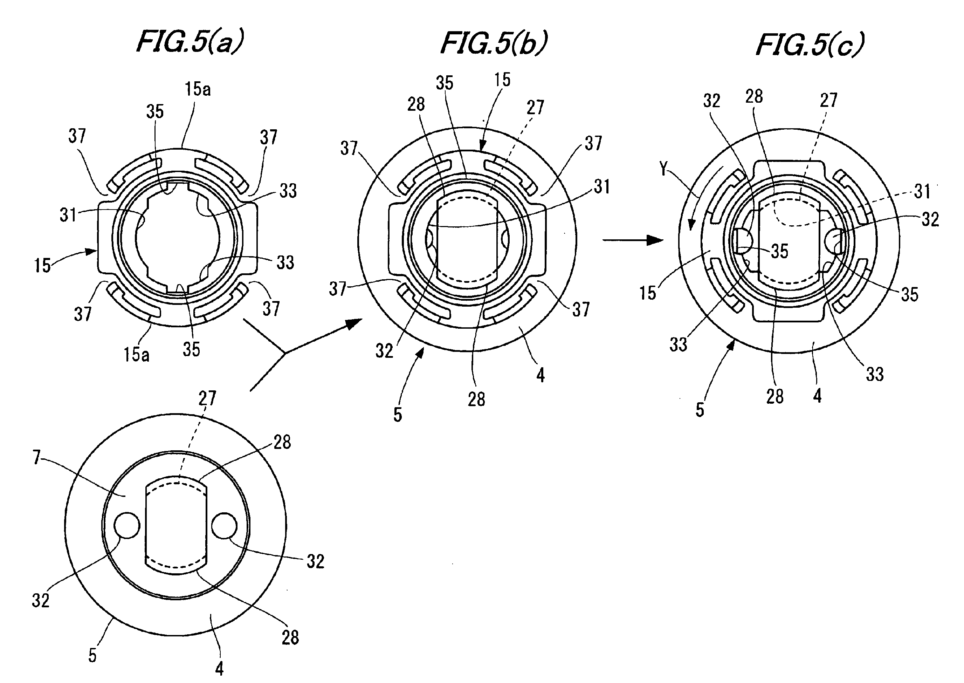

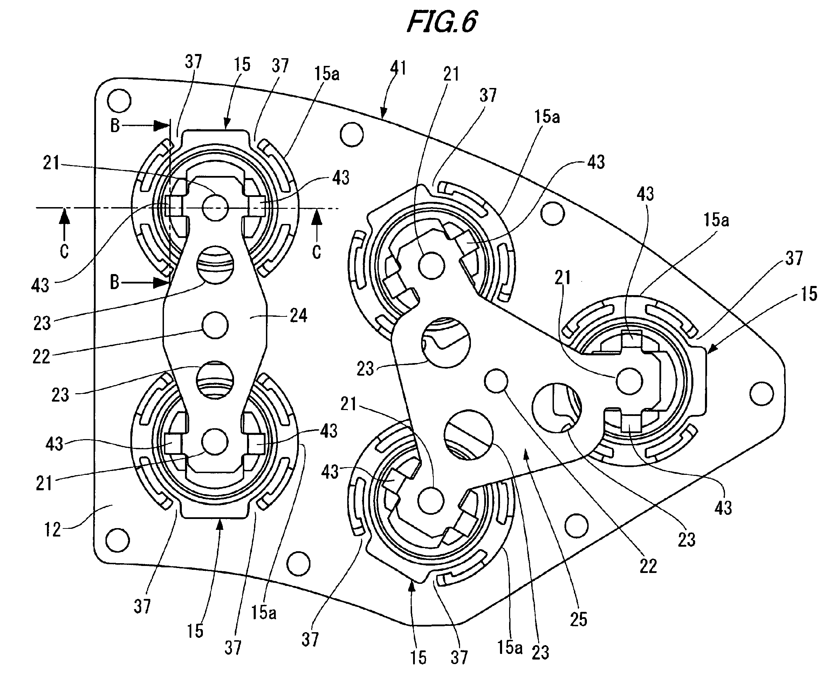

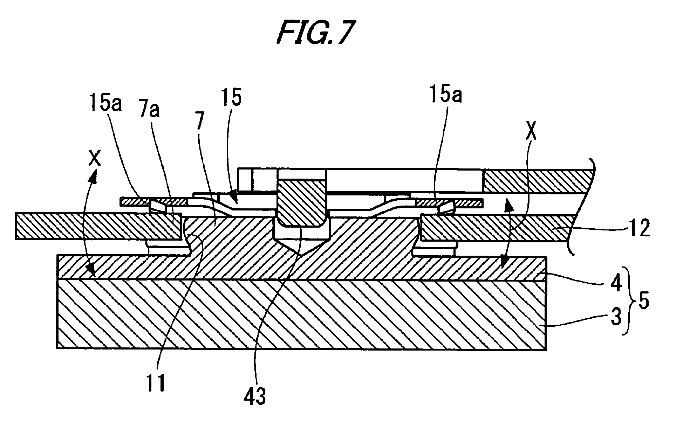

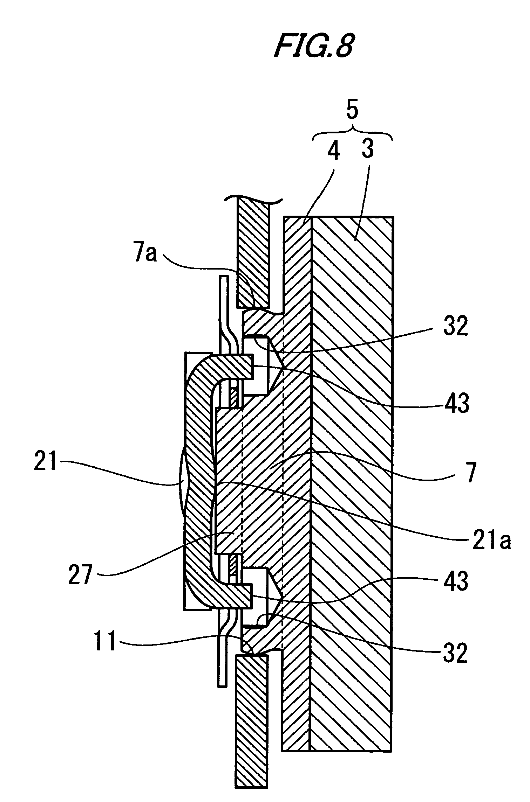

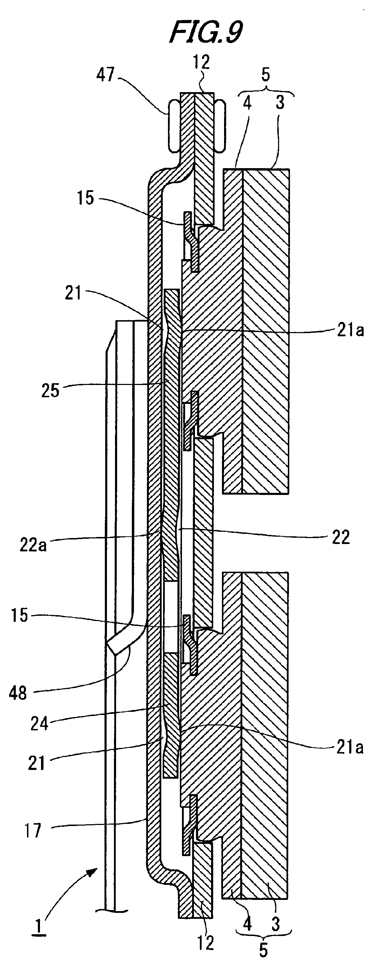

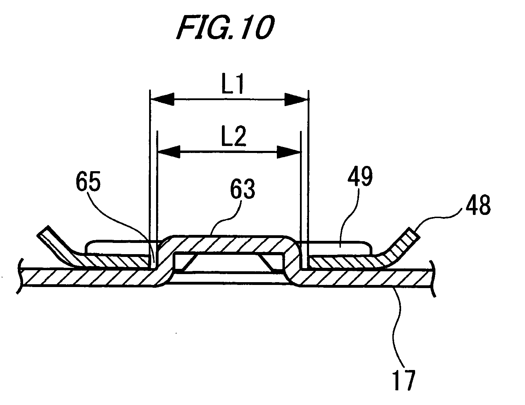

Fig. 1 is a front view of a disc brake friction member assembly according to a first exemplary embodiment of the invention, Fig. 2 is a rear view of the disc brake friction member assembly shown in Fig. 1, Fig. 3 is a view resulting when the disc brake friction member assembly is seen in a direction indicated by an arrow A in Fig. 2, Fig. 4 is an exploded perspective view of the disc brake friction member assembly shown in Fig. 2, Figs. 5(a) to 5(c) show explanatory views of steps of connecting a plate spring to a lining assembly shown in Fig. 4, Fig. 6 is a rear view of the disc brake friction member assembly in which a torque receiving plate and an anchor plate are removed from the disc brake friction member assembly so as to expose link plates which receive pressures from respective lining assemblies, Fig. 7 is a sectional view taken along the line B-B in Fig. 6, Fig. 8 is a sectional view taken along the line C-C in Fig. 6, Fig. 9 is a sectional view taken along the line D-D in Fig. 1, and Fig. 10 is a sectional view taken along the line E-E in Fig. 2.

As is shown in Fig. 1, a disc brake friction member assembly 1 is divided into two disc brake friction member assemblies 1A, 1B which are disposed in such a manner as to be aligned in a direction in which brake torque is applied (in a tangential direction of a disc rotor, which is a direction indicated by arrows P in Fig. 1).

Since the two disc brake friction member assemblies 1A, 1B are such as to have the same configuration, the disc brake friction member assembly 1A will be taken for detail description of a parts configuration thereof.

The disc brake friction member assembly 1A comprises a guide plate 12 which has a plurality of lining assemblies 5 in which backing plates 4 are fastened to rear surfaces of friction members 3 which are pressed against a disc rotor, not shown, torque transmission rings 7 which are each formed into a substantially circular disc shape having an external shape smaller than the backing plate 4 and are connected to centers of the backing plates 4, respectively, and five guide holes 11 in which outer circumferential surfaces 7a of the torque transmission rings 7 fit in such a manner as to turn therein and is adapted to receive a brake torque applied to the lining assemblies 5 via the torque transmission rings 7, plate springs 15 which each have an external shape larger than the guide hole 11 and are placed over the guide holes 11 in such a manner as to be connected to the lining assemblies 5 to thereby hold the lining assemblies 5 and the torque transmission rings 7 to the guide plate 12 in such a manner as to turn thereon, a torque receiving plate 17 which supports the guide plate 12 in such a manner as to receive the brake torque applied to the guide plate, and two types of link plates 24, 25 which each include a plurality of rear surface abutment portions (rear surface abutment curved surface portions) 21 which are brought into abutment with rear surfaces of the plurality of lining assemblies 5 and a single plate abutment portion 22 which is brought into abutment with the torque receiving plate 17 and are adapted to transmit pressure between the lining assemblies 5 and the torque receiving plate 17.

The friction member 3 has a circular disc shape, and the backing plate 4 fastened to the rear surface of the friction member 3 also has a circular disc shape whose diameter is the same as that of the friction member 3.

In the case of this embodiment, the torque transmission ring 7 is formed into a circular disc shape whose diameter is smaller than that of the backing plate 4 and is, as is shown in Figs. 4 and 7, formed integrally on the backing plate.

The outer circumferential surface 7a of the torque transmission ring 7 is, as is shown in Fig. 7, formed into a convexly curved surface which is brought into point contact with an inner circumferential surface of the guide hole 11. By the torque transmission ring 7 fitting in the guide hole 11 at the curved surface, the lining assembly 5 is supported in the guide hole 11 in such a manner as to turn (swing) in directions indicated by arrows X in Fig. 7. This turning behavior becomes necessary for the friction member 3 to follow undulation generated in the disc rotor so as to maintain a constant contact area.

In addition, as is shown in Figs. 5(a) to 5(c) and 8, a connecting shaft portion 27 and fastening pieces 28 are formed integrally on a rear surface (a surface opposite to a surface facing the lining assembly 5) of the torque transmission ring 7. The connecting shaft portion 27 is formed in such a manner as to project into an angular rod whose diameter is smaller than that of the torque transmission ring 7, and the fastening pieces 28 are formed in such a manner as to radially extend from parts of a distal end side (a side opposite to a side facing the torque transmission ring 7) of the connecting shaft portion 27.

Gaps produced between the fastening pieces 28 and the torque transmission ring 7 which confronts the fastening pieces 28 by so providing the fastening pieces 28 constitute grooves into which a circumferential edge portion of a fitting hole 31 in a plate spring 15, which will be described later, is allowed to barge.

As is shown in Figs. 5(a) to 5(c) and 8, on the torque transmission ring 7, rotation restricting depressions 32 are formed in a vacant space lying on the periphery of the connecting shaft portion 27.

In the case of this embodiment, the rotation restricting depression 32 is a circular fitting hole.

The connecting shaft portion 27 fits rotatably in the circular fitting hole 31 formed in the plate spring 15.

As is shown in Fig. 5(a), the plate spring 15 has notches 33 which continuously connect to the circumferential edge portion 31 as part thereof so as to allow the fastening pieces 28 to pass therethrough.

By so providing the notches 33, as is shown in Fig. 5 (a), the notches 33 are positioned in such a manner as to coincide with the positions (orientations) of the fastening pieces 28 so as to allow the connecting shaft portion 27 and the fastening pieces 28 to pass through the fitting hole 31 to thereby realize a state shown in Fig. 5(b), and as is shown in Fig. 5(c), the plate spring 15 is rotated in a direction indicated by an arrow Y so as to generate a relative rotation between the lining assembly 5 and the plate spring 15, whereby the circumferential edge portion of the fitting hole 31 barges into the groove-like portions between the fastening pieces 28 and the torque transmission ring 7 which confronts the fastening pieces 28, resulting in a state in which the plate spring 15 is prevented from being dislocated from the connecting shaft portion 27.

As is shown in Fig. 5(c), local openings 35 (radially recessed portions on an inside diameter portion) are formed in the plate spring 15 in such a manner as to overlap the rotation restricting depressions 32 formed in the torque transmission ring 7 when the plate spring 15 and the connecting shaft portion 27 are rotated relatively through about 90° so as to produce the state in which the plate spring 15 is prevented from being dislocated from the connecting shaft portion 27.

As is shown in Figs. 6 and 7, the plate spring 15 exhibits spring properties by an outer circumferential portion 15a being brought into contact with the guide plate 12 to thereby produce a deflected deformation between the outer circumferential portion and an inner circumferential portion. However, as is shown in Fig. 5(a), cuts 37 are provided in four locations on the outer circumferential portion, so as to divide the contact portion on the outer circumferential portion to the guide plate 12.

When the plate spring 15 is put in the state shown in Fig. 5(c) from the state shown in Fig. 5(b), as is shown in Fig. 5(b), a portion lying in the vicinity of a central portion of the plate spring 15 which fits on the connecting shaft portion 27 is pressed towards the guide plate 12 side so as to deform the plate spring 15 elastically, and when the plate spring 15 is rotated 90° relative to the connecting shaft portion 27 in that state, the state shown in Fig. 5(c) results.

The guide plate 12 of this embodiment has the five guide holes 11. When the torque transmission rings 7 of the lining assemblies 5 are fitted in the guide holes 11, respectively, and thereafter the plate springs 15 fitted on the connecting shaft portions 27 which project from the torque transmission rings 7 of the respective lining assemblies 5 are put in the dislocation prevented state shown in Fig. 5(c), a partial assembly 41 is completed in which the five lining assemblies 5 are integrated into the guide plate 12 (in Fig. 6, a state in which the link plates 24, 25 are removed).

As a fabricating method of the disc brake friction member assembly 1 of this embodiment, a fabrication method is adopted which includes the steps of introducing the partial assembly 41, which is completed in the way described above by building the lining assemblies 5 in all the guide holes 11 in the guide plate 12 so that the five lining assemblies 5 are integrated into the guide plate 12 in advance, into a fabrication line, then building the respective link plates 24, 25 onto the partial assembly 41 from a rear surface side of the guide plate 12 as is shown in Fig. 6, and fastening the torque receiving plate 17 to the guide plate 12.

As is shown in Fig. 6, the link plate 24 is such as to fasten the two lining assemblies 5 which are held on to the guide plate 12 in such a manner as to transmit pressures. A rear surface abutment portion 21 is provided at each end of the link plate 24 in such a manner as to be brought into abutment with a rear surface of each lining assembly 5. In addition, a single plate abutment portion 22 is provided in an intermediate position between the two rear surface abutment portions 21 in such a manner as to be brought into abutment with the torque receiving plate 17.

As is shown in Fig. 8, the rear surface abutment portion 21 enables the transmission of a pressure between the lining assembly 5 and the link plate 24 without sacrificing the turning properties of the lining assembly 5 indicated by the arrows X in Fig. 7 by bringing a curved surface portion 21a projecting towards the lining assembly 5 side into abutment with a center of an apex portion of the connecting shaft portion 27.

As is shown in Fig. 9, the plate abutment portion 22 enables the transmission of a pressure between the torque receiving plate 17 and the link plate 24 through rotatable abutment of the link plate 24 with the torque receiving plate 17 by bringing a curved surface portion 22a projecting towards the torque receiving plate 17 side into abutment with the torque receiving plate 17.

As is shown in Fig. 6, the link plate 25 is such as to fasten the three lining assemblies 5 which are held on to the guide plate 12 in such a manner as to transmit pressures. Rear surface abutment portions 21 are provided at distal end sides of arm-shaped portions which extend in three directions from a center of the link plate 25 in such a manner as to be brought into abutment with rear surfaces of the respective lining assemblies 5. In addition, a single plate abutment portion 22 is provided in such a manner as to be positioned in the center of the link plate 25, and the plate abutment portion 22 is made to be brought into abutment with the torque receiving plate 17.

The constructions of the rear surface abutment portions 21 and the plate abutment portion 22 are the same as those of the rear surface abutment portions 21 and the plate abutment portion 22 of the link plate 24 that has been described before.

Weight reducing holes 23 are formed appropriately in the link plates 24, 25 in such a manner as to penetrate therethrough for reduction of the weights of the respective plates.

As is shown in Figs. 7 and 8, a pair of rotation restricting projections (rotation restricting bent claws) 43 are provided on each of the rear abutment portions for restricting the rotation of the plate spring 15 and the torque transmission ring 7 which are superimposed on each other.

The rotation restricting projections 43 provided on the respective link plates 24, 25 are locking claws which result by bending projecting pieces formed on the rear surface abutment portions 21 in such a manner as to extend from both sides thereof and the rotation restricting projections 43 so formed are made to fit in the local openings 35 and the rotation restricting depressions 32 which overlap each other as is shown in Fig. 5(c), so as to rotate the rotation of the lining assemblies 5 and the plate springs 15.

The torque receiving plate 7 is connected to a rear surface of the guide plate 12 in such a state that the link plates 24, 25 are set on the respective lining assemblies 5 which are held on to the guide plate 12 as is shown in Fig. 6.

As is shown in Fig. 4, riveting through holes 46 are formed at appropriate intervals on outer circumferential portions of the guide plate 12 and the torque receiving plate 17. The guide plate 12 and the torque receiving plate 17 are superimposed on each other along the outer circumferential portions thereof and are then connected and fixed to each other strongly by rivets 47 which are passed through the through holes 46.

Namely, in the case of this embodiment, the friction members 3 which are provided in the form of the lining assemblies 5 are attached to the torque receiving plate 17 via the guide plate 12 and the link plates 24, 25, and brake torque applied to the friction members 3 is made to be transmitted to the torque receiving plate 17 via the guide plate 12.

As is shown in Fig. 4, in the case of this embodiment, the torque receiving plate 17 is treated in the form of an anchor plate assembly 50 in which an anchor plate 48 is fixed to the torque receiving plate 17 by rivets 49 so that the anchor plate 48 is integrated with the torque receiving plate 17.

In a disc brake system on the vehicle side, the anchor plate 48 is fixed to an anchor block (a friction member attaching means) which is driven to move towards and away from the disc rotor by an actuator.

In the disc brake friction member assemblies 1A, 1B of the embodiment, as is shown in Figs. 2 and 4, on the rear surface of the torque receiving plate 17, a cut-and-erected portion 63 is formed which has an abutment surface 61 along a direction which intersects at right angles a direction in which brake torque is applied.

This cut-and-erected portion 63 is formed in a step of pressing respective portions of the torque receiving plate 17.

In addition, a cut-out portion 65 is formed in the anchor plate 48 which is riveted to the torque receiving plate 17, so that the cut-and-erected portion 63 fits in the cut-out portion 65, whereby the brake torque received by the torque receiving plate 17 is received by the cut-out portion 65 via the cut-and-erected portion 63.

As is shown in Fig. 4, an opening width W1 of the cut-out portion 65 along the direction in which brake torque is applied is set so as to be slightly smaller than a spacing distance between the confronting abutment surfaces 61, 61 of the cut-and-erected portion 63 so that the fitting of the cut-and-erected portion 63 in the cut-out portion 65 becomes so tight as to provide a tight fitting (a tight fit). In contrast to this, a length L1 of the cut-out portion 65 along a direction which intersects at right angles the direction in which brake torque is applied is set so as to be larger than a corresponding length L2 of the cut-and-erected portion 63 so that the cut-and-erected portion 63 fits loosely in the cut-out portion 65.

The torque receiving plate 17 and the anchor plate 48 are integrated into the anchor plate assembly 50 by allowing the cut-and-erected portion 63 on the torque receiving plate 17 to fit in the cut-out portion 65 in the anchor plate 48 and thereafter clamping the rivets 49 which are passed through the riveting through holes.

As is shown in Fig. 9, in a fabrication completed state in which the torque receiving plate 17 is fixed to the guide plate 12, the plate abutment portions 22 of the respective link plates 24, 25 are brought into abutment with an inner surface of the torque receiving plate 17 in such a manner as to turn freely, whereby a pressure transmitted to the torque receiving plate 17 via the actuator of the disc brake system, not shown, is transmitted to the respective lining assemblies 5 by way of the plate abutment portions 22 and the rear surface abutment portions 21. Inaddition, a reaction force of a pressure produced when the friction members 3 are pressed against the disc rotor is transmitted to and received by the torque receiving plate 17 from the lining assemblies 5 by way of the rear surface abutment portions 21 and the plate abutment portions 22.

On the other hand, when the brakes are applied, brake torque applied from the disc rotor to the lining assemblies 5 is transmitted from the outer circumferential surfaces 7a of the torque transmission rings 7 which are integrated with the lining assemblies 5 to the guide plate 12 in which the torque transmission rings 7 fit, and thereafter, the brake torque so transmitted is transmitted to the torque receiving plate 17 which is fixed to the guide plate 12. Furthermore, the brake torque so transmitted is then transmitted from the torque receiving plate 17 to the anchor plate 48 via a projection and recess fitting between the cut-and-erected portion 63 formed on the torque receiving plate 17 and the cut-out portion 65 formed in the anchor plate 48.

As has been described heretofore, in the disc brake friction member assembly 1A of this embodiment, the brake torque is made to be transmitted from the torque receiving plate 17 to the anchor plate 48 via the projection and recess fitting between the cut-and-erected portion 63 on the torque receiving plate 17 and the cut-out portion 65 in the anchor plate 48.

This projection and recess fitting between the cut-and-erected portion 63 and the cut-out portion 65 is made to provide the loose fit of the order of 1 mm due to the length L1 being set so as to be larger than the length L2 as is shown in Fig. 10 in the radial direction of the disc rotor which intersects at right angles the brake torque transmitting direction (the tangential direction of the disc rotor), whereby the application of a radial load generated between the respective plates in association with thermal deformation thereof to the projection and recess fitting portion can be avoided.

Consequently, when compared with the conventional connection by way of the press fit pin, the load applied to the projection and recess fitting portion which constitutes the engagement portion for torque transmission is reduced, making it difficult for metal fatigue to be generated.

Because of this, the frequency at which the maintenance and inspection work is carried out to detect metal fatigue is reduced, thereby making it possible to increase the handling properties of the disc brake friction member assembly.

In addition, the cut-and-erected portion 63 provided on the torque receiving plate 17 is such as to be formed integrally on the torque receiving plate 17, and when compared with the conventional disc brake friction member assembly in which the separate press fit pin is used, by the reduction in the number of constituent components involved, not only can the fabrication properties be increased, but also a reduction in production costs can be realized.

Furthermore, as is shown in Fig. 1, since the disc brake friction member assembly 1 according to the invention adopts the two-part construction in which it is divided into the two disc brake friction member assemblies 1A, 1B which are disposed in such a manner as to be aligned in the direction in which the brake torque is applied, when compared with the conventional disc brake friction member assembly which adopts the integral or one-part construction, the brake torque is divided into halves for application to the respective disc brake friction member assemblies 1A, 1B. This also functions to reduce the load applied to the projection and recess fitting portion, thereby making it difficult for metal fatigue to be generated.

### <Second Exemplary Embodiment>

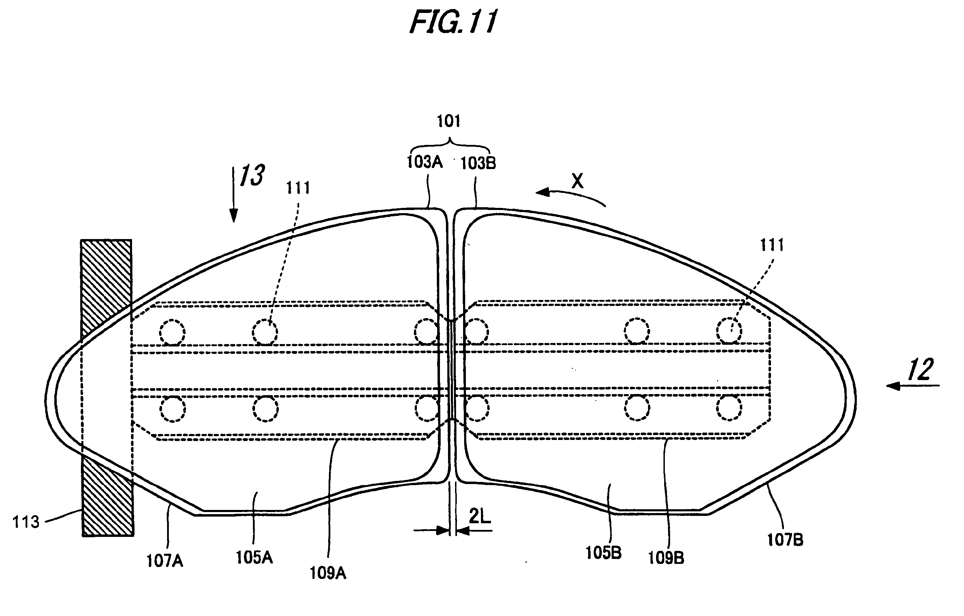

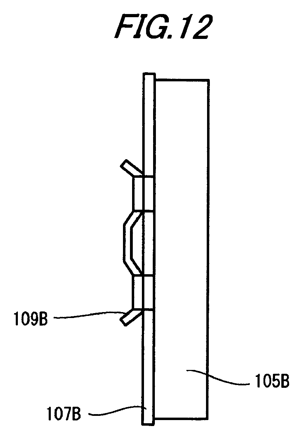

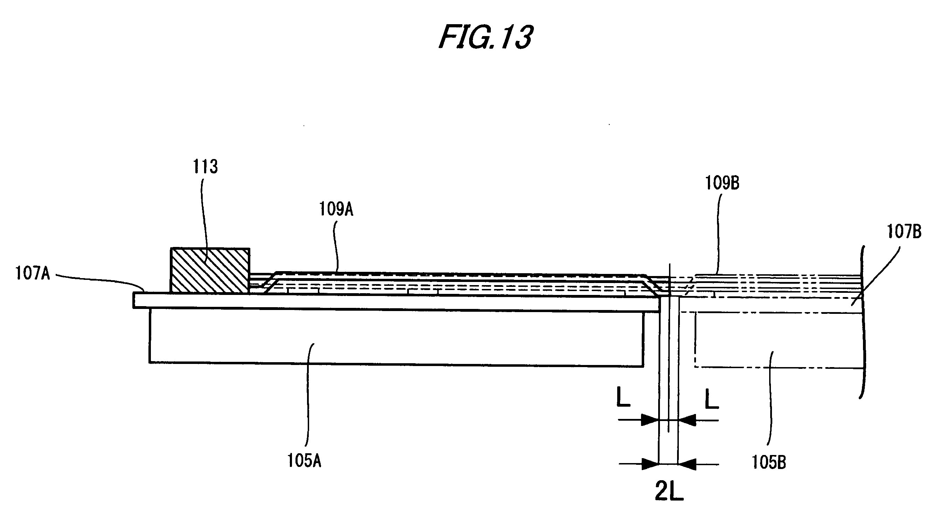

Fig. 11 is a front view of a disc brake friction member assembly according to a second exemplary embodiment, Fig. 12 is a view as seen in a direction indicated by an arrow 12 in Fig. 11, and Fig. 13 is a view as seen in a direction indicated by an arrow 13.

A disc brake friction member assembly 101 shown in Fig. 11 is used in a disc brake system for a railway vehicle. The disc brake friction member assembly 101 is a divided type disc brake friction member assembly in which two friction member assemblies 103A, 103B are disposed in series along a circumferential direction of a disc rotor, not shown, which is fixed to an axle.

The respective friction member assemblies 103A, 103B are symmetrical in structure. The respective friction member assemblies 103A, 103B include torque receiving plates 107A, 107B and anchor plates 109A, 109B. Onto front surface sides of the torque receiving plates 107A, 107B, friction members (friction pads) 105A, 105B adapted to be pressed against the disc rotor are mounted. The torque receiving plates 107A, 107B receive brake torque that is applied to the friction members 105A, 105B. The anchor plates 109A, 109B are fastened to rear surfaces of the respective torque receiving plates 107A, 107B.

In the second exemplary embodiment, the torque receiving plates 107A, 107B are backing plates which are fastened to rear surfaces of the friction members 105A, 105B. External shapes of the torque receiving plates 107A, 107B are set larger than those of the friction members 105A, 105B. Outer circumferential edges of the torque receiving plates 7A, 7B project further outwards than the friction members 105A, 105B.

The anchor plates 109A, 109B are fastened to and integrated with the rear surfaces of the corresponding torque receiving plates 107A, 107B by spot welding 111 made in six spot welding locations on each torque receiving plate.

The spot welding 111 has a welding area which is set so as to obtain a required joining strength.

Assuming that the disc rotor rotates in a direction indicated by an arrow X in Fig. 11, of the friction member assemblies 103A, 103B which are aligned in series, the anchor plate 109A of the friction member assembly 103A which lies on a downstream side of the rotational direction of the disc rotor is brought into abutment with an anchor block 113 which is fixed to a vehicle body, and brake torque applied to the friction member assembly 103B which lies on an upstream side of the rotational direction of the disc rotor is transmitted to the anchor block 113 via the friction member assembly 103A which lies adj acent to the upstream-side f rictionmember assembly 103B on the downstream side.

In the disc brake friction member assembly 101 of the second exemplary embodiment, as is shown in Fig. 13, the anchor plates 109A, 109B are attached respectively to the torque receiving plates 107A, 107B. Edges of the anchor plates 109A, 109B project further by a dimension L than end portions of the torque receiving plates 107A, 107B. Therefore, the friction member assemblies 103A, 103B, which lie adjacent to each other in such a state that they are arranged in series, are brought into abutment with each other at end portions of the anchor plates 109A, 109B, while the torque receiving plates 107A, 107B are spaced by a distance 2L apart from each other.

In addition, the dimension L is set to such an appropriate value that the end portions of the anchor plates 109A, 109B are not situated further inwards than the end portions of the torque receiving plates 107A, 107B even though the dimension tolerance and building errors are accumulated.

In the disc brake friction member assembly 101 that has been described above, since the friction member assemblies 103A, 103B which lie adjacent to each other in such a state that they are disposed in series are in abutment with each other at the end portions of the anchor plates 109A, 109B which project further than the end portions of the torque receiving plates 107A, 107B, while the torque receiving plates 107A, 107B lie spaced apart from each other, the brake torque applied to the torque receiving plate 107B of the friction member assembly 103B which lie on the upstream side of the rotational direction of the disc rotor is transmitted to the anchor plate 109A of the friction member assembly 103A which lie adjacent to the upstream-side friction member 103B on the down stream side but is not transmitted to the torque receiving plate 107A of the downstream-side friction member assembly 103A.

Consequently, in the respective friction member assemblies 103A, 103B which are disposed in series in the circumferential direction of the disc rotor, the brake torque received by the friction member assembly 103B which lie on the upstream side of the rotational direction of the disc rotor is not inputted into the torque receiving plate 107A of the friction member assembly 103A which lie on the downstream side of the rotational direction of the disc rotor, whereby the problem of reduction in durability or failure of the connecting means such as rivets which fasten the torque receiving plate to the anchor plate can be avoided which would otherwise be caused in the downstream-side friction member assembly 103A due to the excessive load, and the durability of the disc brake friction member assembly 101 can be increased.

### <Third Exemplary Embodiment>

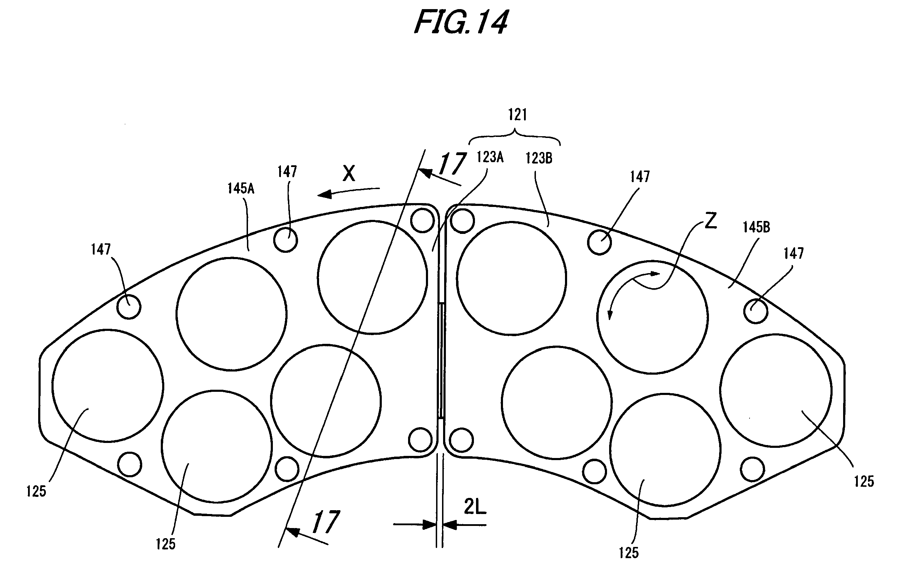

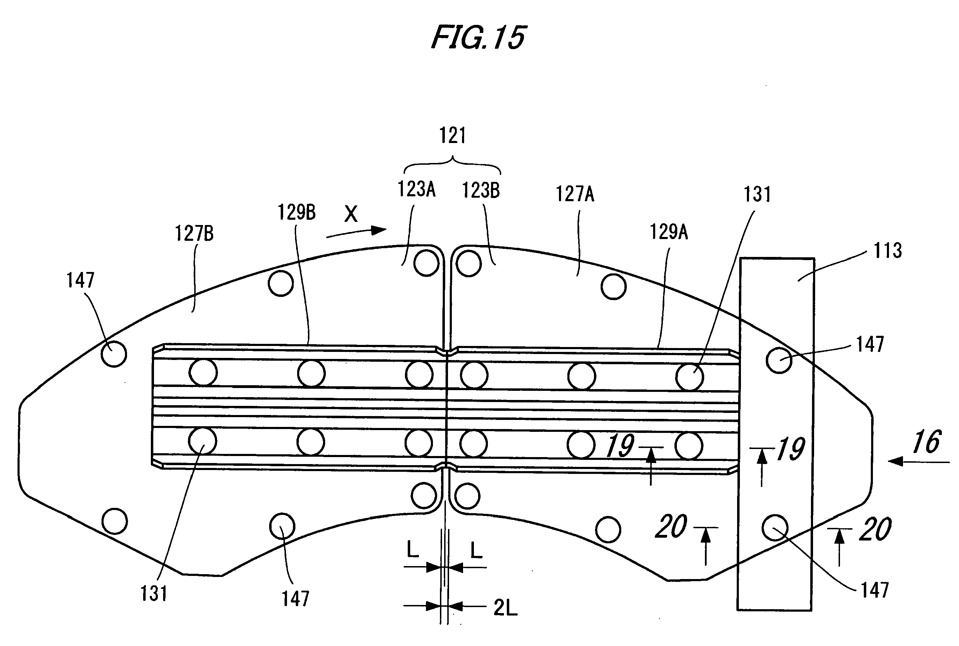

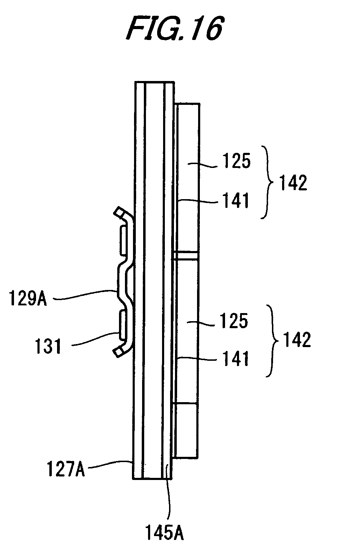

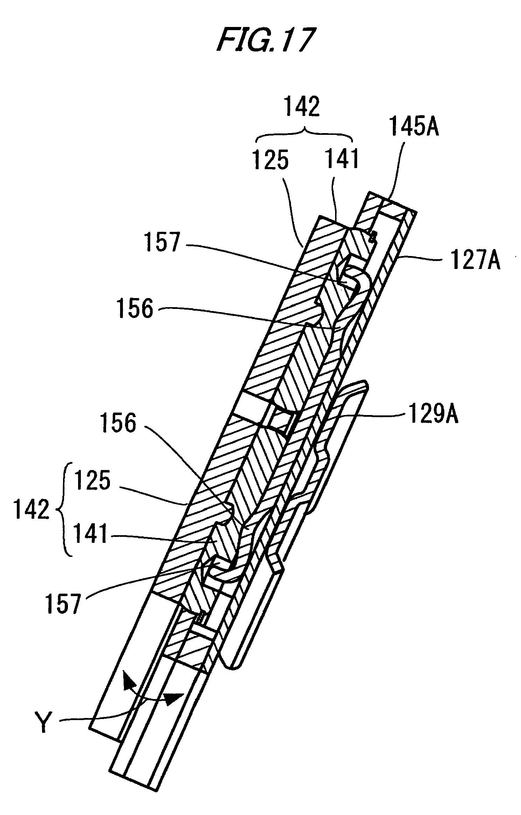

Fig. 14 is a front view of a disc brake friction member assembly according to a third exemplary embodiment, Fig. 15 is a rear view of the disc brake friction member assembly shown in Fig. 14, Fig. 16 is a view as seen in a direction indicated by an arrow 16 in Fig. 15, Fig. 17 is a sectional view taken along the line 17-17 in Fig. 14,

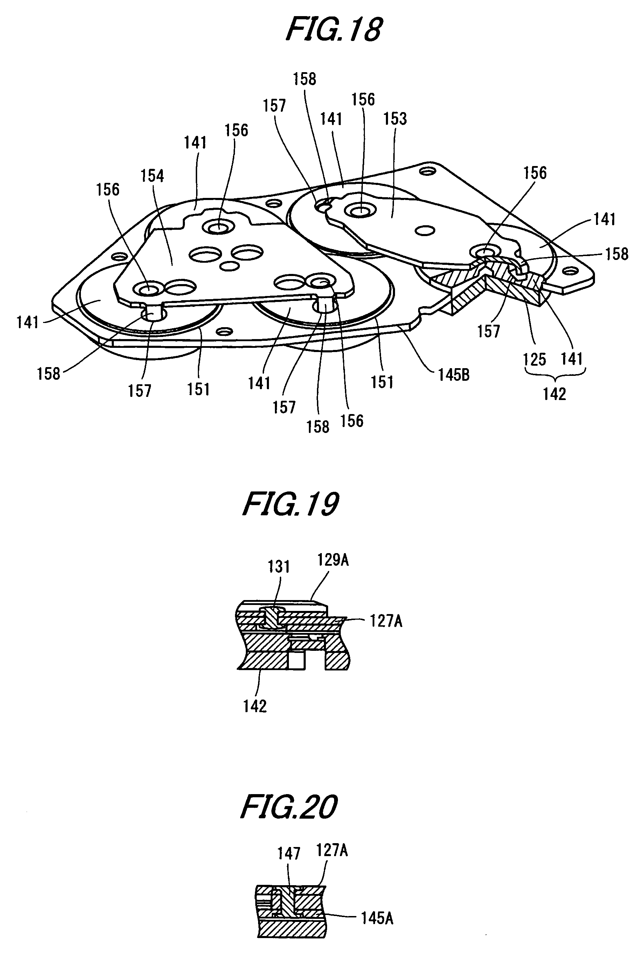

Fig. 18 is a perspective view showing a state in which an anchor plate and a torque receiving plate of one of friction member assemblies shown in Fig. 15 are removed, Fig. 19 is a sectional view taken along the line 19-19 in Fig. 15, and Fig. 20 is a sectional view taken along the line 20-20 in Fig. 15.

A disc brake friction member assembly 121 shown in Fig. 14 is also a two-part type disc brake friction member assembly for use in a disc brake system of a railway vehicle and is made up of two friction member assemblies 123A, 123B which are disposed in series along a circumferential direction of a disc rotor, not shown, which is fixed to an axle.

In addition, the respective friction member assemblies 123A, 123B are symmetrical in structure and include torque receiving plates 127A, 127B on to front surface sides of which friction members (friction pads) 125 adapted to be pressed against the disc rotor are built and which receive brake torque that is applied to the friction members 125 and anchor plates 129A, 129B which are fastened to rear surfaces of the respective torque receiving plates 127A, 127B.

In the third exemplary embodiment, the respective anchor plates 129A, 129B are connected to and integrated with the corresponding torque receiving plates 127A, 127B with six rivets 131.

In the third exemplary embodiment, the friction members 125 are circular. As shown in Fig. 17, rear surfaces of the friction members 125 are joined to backing plates 141 having a similar circular shape, and the friction members 125 and backing plates 141 configure pad assemblies 142.

On front surface sides of the respective torque receiving plates 127A, 127B, guide plates 145A, 145B which hold the pad assemblies 142 are provided in such a manner as to be fixed to the corresponding torque receiving plates 127A, 127B with rivets 147.

Five pad mounting holes 151 into which the pad assemblies 142 are to be fitted are formed in each of the guide plates 145A, 145B.

As is shown in Fig. 18, the five pad assemblies 142 which are built into each of the guide plates 145A, 145B are divided into two groups, one made up of two and the other made up of three pad assemblies, so as to be supported by two link plates 153, 154.

As is shown in Figs. 17 and 18, the respective link plates 153, 154 include convexly raised spherical portions 156 adapted to be brought into abutment with centers of the backing plates 141 of the respective pad assemblies 142 and locking claws 158 adapted to fit in locking holes 157 which are formed in positions spaced apart from the centers of the backing plates 141. In addition, the link plates 153, 154 are brought into abutment with the torque receiving plates 127A, 127B on rear surfaces thereof, whereby the displacement of the link plates 153, 154 in their thickness direction is restricted.

The respective pad assemblies 142 mounted on to the guide plates 145A, 145B are supported by the convexly raised spherical portions 156 of the link plates 153, 154 which are brought into abutment with rear surfaces of the pad assemblies 142. Therefore, the positions of the pad assemblies 142 in an axial direction of the disc rotor are restricted and an swinging properties (swing actions in directions indicated by arrows Y in Fig. 17) of the pad assemblies 142 are ensured which become necessary for the pad assemblies 142 to follow undulations of the disc rotor which are produced by thermal deformation thereof.

Further, by the locking claws 158 fitting in the locking holes 157, the rotation of the pad assemblies 142 in a direction indicated by an arrow Z in Fig. 14 is restricted.

When compared with the friction member assemblies 103A, 103B of the second exemplary embodiment which are shown in Fig. 11, in the friction member assemblies 123A, 123B of the third exemplary embodiment, since the friction members 115 are supported in such a manner as to be freely swung via the guide plates 145A, 145B and the link plates 153, 154, even though undulations are produced on the surface of the disc rotor due to thermal deformation thereof, the respective friction members 125 can follow the undulations so produced so as to maintain good contact properties with the disc rotor. Therefore, the braking performance is reduced in no case due to the undulation of the disc rotor.

In addition, as similar to the second exemplary embodiment, in the friction member assemblies 123A, 123B of the third exemplary embodiment, as well, assuming that the disc rotor rotates in the direction indicated by the arrow X in Figs. 14 and 15, of the friction member assemblies 123A, 123B which are aligned in series, the anchor plate 129A of the friction member assembly 123A which lies on a downstream side of the rotational direction of the disc rotor is brought into abutment with an anchor block 113 which is fixed to a vehicle body, and brake torque applied to the friction member assembly which lies on an upstream side of the rotational direction of the disc rotor (in the third exemplary embodiment, the friction member assembly 123B) is transmitted to the anchor block 113 via the friction member assembly 123A which lies adjacent to the upstream-side friction member assembly 123B on the downstream side.

In addition, in the case of the disc brake friction member assembly 121, as well, as is shown in Fig. 15, the friction member assemblies 123A, 123B, which lie adjacent to each other in such a state that they are arranged in series, are brought into abutment with each other at end portions of the anchor plates 129A, 129B which are attached respectively to the torque receiving plates 127A, 127B in such a state that edges of the anchor plates 129A, 129B project further by a dimension L than end portions of the torque receiving plates 127A, 127B, while the torque receiving plates 127A, 127B are spaced by a distance 2L apart from each other.

In addition, the dimension L is set to such an appropriate value that the end portions of the anchor plates 129A, 129B are not situated further inwards than the end portions of the torque receiving plates 127A, 127B even though the dimension tolerance and building errors are accumulated.

Consequently, in the disc brake friction member assembly 121 of the third exemplary embodiment, as well, since the friction member assemblies 123A, 123B which lie adjacent to each other in such a state that they are disposed in series are in abutment with each other at the end portions of the anchor plates 129A, 129B which project further than the end portions of the torque receiving plates 127A, 127B, while the torque receiving plates 127A, 127B lie spaced apart from each other, the brake torque applied to the torque receiving plate 127B of the friction member assembly 123B which lie on the upstream side of the rotational direction of the disc rotor is transmitted to the anchor plate 129A of the friction member assembly 123A which lie adjacent to the upstream-side friction member 123B on the down stream side but is not transmitted to the torque receiving plate 127A of the downstream-side friction member assembly 123A.

Consequently, in the respective friction member assemblies 123A, 123B which are disposed in series in the circumferential direction of the disc rotor, the brake torque received by the friction member assembly 123B which lie on the upstream side of the rotational direction of the disc rotor is not inputted into the torque receiving plate 127A of the friction member assembly 123A which lie on the downstream side of the rotational direction of the disc rotor. Thereby, the problem of reduction in durability or failure of the connecting means such as rivets which fasten the torque receiving plate to the anchor plate can be avoided which would otherwise be caused in the downstream-side friction member assembly 123A due to the excessive load, and the durability of the disc brake friction member assembly 121 can be increased.

## Claims

1. A disc brake friction member assembly (1, 1A, 1 B) for a railway vehicle comprising:
a torque receiving plate (17), wherein a friction member (5) is attached on a front side of the torque receiving plate (17) and the torque receiving plate (17) receives a brake torque applied to the friction member (5); and
an anchor plate (48) fixed to a rear surface of the torque receiving plate (17) and attached to an anchor block on a vehicle side;
a cut-and-erected portion (63) formed on the rear surface of the torque receiving plate (17) and having an abutment surface (61) along a direction orthogonal to a direction in which the brake torque is applied; and
a cut-out portion (65) provided on the anchor plate (48), wherein the cut-and-erected portion (63) fits to the cut-out portion (65) so that the cut-out portion (65) receives the brake torque via the abutment surface (61),
**characterized in**
having a length (L1) of the cut-out portion (65) along the direction orthogonal to the direction in which the brake torque is applied is larger than a length (L2) of the cut-and-erected portion (63) along the direction orthogonal to the direction in which the brake torque is applied.

2. The disc brake friction member assembly according to claim 1, wherein the disc brake friction member assembly (1) is divided into two disc brake friction member assemblies (1A, 1B) which are aligned in the direction in which the brake torque is applied.

## Patentansprüche

1. Scheibenbremsreibungselement-Anordnung (1, 1A, 1 B) für ein Schienenfahrzeug, mit:
ein Drehmomentaufnahmeplatte (17), wobei ein Reibungselement (5) auf einer Vorderseite der Drehmomentaufnahmeplatte (17) angebracht ist und, wobei die
Drehmomentaufnahmeplatte (17) ein Bremsmoment das aus das Reibungselement (5) wirkt, aufnimmt; und
eine Ankerplatte (48), welche an einer hinteren Oberfläche der Drehmomentaufnahmeplatte (17) befestigt ist und an einem Ankerblock an einer Fahrzeugseite angebracht ist;
einen geschnittenen-und-aufgerichteten Abschnitt (63), welcher auf der Rückfläche der Drehmomentaufnahmeplatte (17) ausgebildet ist und eine Anschlagfläche (61) aufweist,
entlang einer Richtung orthogonal zu einer Richtung in der das Bremsmoment aufgebracht wird; und
einen ausgeschnittenen Abschnitt (65), welcher an der Ankerplatte (48) vorgesehen ist, wobei der ausgeschnittene Abschnitt (65) mit dem geschnittenen-und-aufgerichteten Abschnitt (63) in Passung steht, so dass der ausgeschnittene Abschnitt (65) das Bremsmoment über die Anschlagfläche (61) aufnimmt,
**gekennzeichnet dadurch, das**
eine Länge (L1) des ausgeschnittenen Abschnitt (65) entlang der Richtung senkrecht zu der Richtung, in der das Bremsmoment aufgebracht wird größer ist, als eine Länge (L2) des geschnittenen-und-aufgerichteten Abschnitts (63) entlang der Richtung senkrecht zu der Richtung, in der das Bremsmoment aufgebracht wird.

2. Scheibenbremsreibungselement-Anordnung nach Anspruch 1, wobei die Scheibenbremsreibungselement-Anordnung (1) unterteilt ist in zwei Scheibenbremsreibungselement-Anordnungen (1A, 1B), die in der Richtung zueinander ausgerichtet sind, in der das Bremsmoment aufgebracht wird.

## Revendications

1. Ensemble d'élément de frottement de frein à disque (1, 1A, 1B) pour un véhicule ferroviaire comprenant :
une plaque de réception de couple (17), dans lequel un élément de frottement (5) est fixé sur un côté avant de la plaque de réception de couple (17) et la plaque de réception de couple (17) reçoit un couple de freinage appliqué à l'élément de frottement (5) ; et
une plaque d'ancrage (48) fixée sur une surface arrière de la plaque de réception de couple (17) et fixée sur un bloc d'ancrage sur un côté de véhicule ;
une partie découpée et érigée (63) formée sur la surface arrière de la plaque de réception de couple (17) et ayant une surface de butée (61) le long d'une direction orthogonale à une direction dans laquelle le couple de freinage est appliqué ; et
une partie découpée (65) placée sur la plaque d'ancrage (48), dans lequel la partie découpée et érigée (63) s'ajuste sur la partie découpée (65) de telle manière que la partie découpée (65) reçoit le couple de freinage via la surface de butée (61) ;
**caractérisé en ce que**
une longueur (L1) de la partie découpée (65) le long de la direction orthogonale à la direction dans laquelle le couple de freinage est appliqué est supérieure à une longueur (L2) de la partie découpée et érigée (63) le long de la direction orthogonale à la direction dans laquelle le couple de freinage est appliqué.

2. Ensemble d'élément de frottement de frein à disque selon la revendication 1, dans lequel l'ensemble d'élément de frottement de frein à disque (1) est divisé en deux ensembles d'élément de frottement de frein à disque (1A, 1B) qui sont alignés dans la direction dans laquelle le couple de freinage est appliqué.
